Europäisches Patentamt

(19) European Patent Office

Office européen des brevets

(11) Numéro de publication: **0187100**
**B1**

(12) **FASCICULE DE BREVET EUROPEEN**

(45) Date de publication du fascicule du brevet:
**03.05.89**

(21) Numéro de dépôt: **85402557.4**

(22) Date de dépôt: **19.12.85**

(51) Int. Cl.⁴: **E 04 B 1/19**

(54) Ensemble d'éléments de construction pour l'aménagement d'espaces d'exposition, d'habitation ou affectés à d'autres usages.

(30) Priorité: **21.12.84 FR 8419628**

(43) Date de publication de la demande:
**09.07.86 Bulletin 86/28**

(45) Mention de la délivrance du brevet:
**03.05.89 Bulletin 89/18**

(84) Etats contractants désignés:
**AT BE CH DE FR GB IT LI LU NL SE**

(56) Documents cités:
**DE-A- 2 100 874**
**DE-A- 2 633 147**
**DE-B- 1 775 597**
**FR-A- 2 224 662**
**FR-A- 2 268 970**
**FR-A- 2 513 736**

(73) Titulaire: **Brullmann, Cuno, 48, rue Mouffetard, F-75007 Paris (FR)**
Titulaire: **Fougeras Lavergnolle, Arnaud, 11, rue Marcelle, F-94130 Nogent sur Marne (FR)**
Titulaire: **BUREAU TECHNIQUE DU BATIMENT D'AMENAGEMENTS ET DE CONSTRUCTIONS B.T.B.A.C., 14, square Adanson, F-75005 Paris (FR)**

(72) Inventeur: **Brullmann, Cuno, 48, rue Mouffetard, F-75005 Paris (FR)**
Inventeur: **Fougeras Lavergnolle, Arnaud, 11, rue Marcelle, F-94130 Nogent Sur Marne (FR)**
Inventeur: **Erlong, Etienne, 180, rue Jean-Baptiste Charcot, F-92400 Courbevoie (FR)**

(74) Mandataire: **Tony-Durand, Serge et al, Cabinet Tony-Durand 77, rue Boissière, F-75116 Paris (FR)**

ACTORUM AG

## Description

La présente invention concerne un ensemble d'éléments de construction pour la réalisation de structures tri-dimensionnelles en vue d'aménager des espaces d'exposition, d'habitation, de bureaux ou affectés à d'autres usages encore.

Il existe déjà divers systèmes d'éléments de constructions conçus dans un tel but et qui permettent notamment de réaliser des cloisons de séparation, des planchers intermédiaires, des cellules distinctes etc... Ces ensembles sont agencés de manière à permettre une grande souplesse d'utilisation ainsi qu'une possibilité de démontage ou de modification des structures réalisées à partir des éléments correspondants.

Ainsi, la demande allemande DE 1 775 597 décrit un système d'assemblage d'éléments profilés au moyen d'un nœud de jonction constitué par un bloc creux dont les différentes faces présentent une ouverture. La fixation de chaque élément profilé sur ce nœud de jonction est assurée par les extrémités recourbées d'une lame de ressort disposée à l'intérieur de l'extrémité de chacun de ces éléments. Ainsi il suffit d'enfoncer les extrémités de cette lame à l'intérieur de l'une des ouvertures d'un nœud de jonction pour obtenir l'accrochage de l'élément profilé correspondant. Toutefois, on obtient de la sorte un simple accrochage qui ne présente pas une robustesse et une rigidité suffisantes pour qu'un tel système puisse être utilisé pour l'assemblage d'éléments de construction.

Quant à la demande allemande DE 2 633 147, elle décrit un système d'assemblage dans lequel il est également prévu des nœuds de jonction constitués chacun par un bloc creux comportant des ouvertures orientées dans différentes directions. Dans le cas de ce système l'extrémité de chaque profilé porte un embout de fixation se terminant par une tête susceptible d'être accrochée, par rotation, à l'intérieur de l'une des ouvertures d'un nœud de jonction. Cet embout de fixation est vissé dans un écrou porté par l'extrémité de l'élément profilé correspondant et il est ainsi possible de réaliser un serrage après accrochage de la tête de cet embout. Cependant là encore, le serrage réalisé n'est pas suffisamment efficace pour que se système puisse être adopté pour l'assemblage d'éléments de construction, d'autant plus qu'il peut se produire un dévissage intempestif sous l'effet de chocs ou trépidations.

Par ailleurs, la demande allemande DE 2 100 874 décrit un treillis de poutres dans lequel les poutres correspondantes sont fixées sur des profilés disposés à l'endroit de leurs lignes de jonction. Ces profilés comportent des gorges présentant un étranglement à leur entrée et qui sont destinées à recevoir l'extrémité renflée d'éléments d'assemblage portés par les poutres correspondantes. Ces éléments d'assemblage sont montés coulissants à l'intérieur des extrémités de ces poutres et des vis de rappel permettent d'obtenir une immobilisation en place des poutres par serrage. Cependant, ce système n'est pas suffisamment efficace pour pouvoir être adopté pour des éléments de construction. Par ailleurs, il est conçu pour l'assemblage de poutres contre des profilés de jonction, mais ne pourrait pas être transposé au cas de l'assemblage des extrémités de différentes poutres sur un nœud commun de jonction.

Pour sa part, la demande française 2 268 970 décrit des éléments destinés à réaliser une ossature de construction et qui sont constitués par des profilés qui comportent des rainures présentant un étranglement à leur entrée. Ces rainures sont destinées à recevoir le tenon d'accrochage d'un embout de fixation permettant de fixer un autre profilé disposé à angle droit. Ces rainures peuvent également recevoir des organes d'assemblage permettant de fixer d'autres éléments, par exemple des panneaux de cloisons ou similaires. Cependant, la conception de ces divers organes d'assemblage nécessite d'engager le tenon d'accrochage de chacun d'eux dans la rainure correspondante, à partir de l'une des extrémités d'un profilé pour amener ensuite cette pièce par coulissement dans la position voulue. Par ailleurs, les éléments d'ossature ainsi prévus ne comprennent aucun moyen permettant de réunir les profilés, dans différentes directions, autour de nœuds communs de jonction pour pouvoir réaliser une structure tri-dimensionelle.

C'est pourquoi la présente invention a pour but de réaliser un ensemble d'éléments de construction qui est conçu de façon à permettre l'assemblage rigide de profilés autour de divers nœuds de jonction pour la réalisation de structures tri-dimensionelles susceptibles de supporter des efforts relativement importants. Cependant, cet ensemble est également conçu de manière qu'un profilé, ou tout autre accessoire voulu, puisse être fixé aisément en un point quelconque de la longueur d'un profilé déterminé.

Le présent ensemble d'éléments comprend des profilés métalliques creux pouvant servir indifféremment de poteaux ou de longerons, ainsi que des nœuds d'assemblage constitués chacun par un bloc creux comportant, dans différentes orientations, une série d'ouvertures dans chacune desquelles peut être accroché la tête saillante d'un embout de fixation rapporté dans l'extrémité d'un profilé. Cependant, cet ensemble est caractérisé en ce que l'embout de fixation, ainsi prévu dans les extrémités des profilés, est monté coulissant dans le sens axial à l'intérieur de ces profilés et il est prévu un coin mobile de blocage disposé transversalement à l'intérieur d'un tel embout de fixation, ainsi qu'à travers des ouvertures correspondantes du profilé respectif, ce qui permet de fixer ce profilé sur un nœud d'assemblage par serrage des bords d'une ouverture de ce nœud entre les rebords de la tête saillante de l'embout de fixation et l'extrémité du profilé.

Suivant une autre caractéristique, les profilés présentent une série de faces planes orientées dans différentes directions, chacune de ces faces porte, sur ses côtés, deux bandes parallèles délimitant une rainure et dont les bords sont pourvus d'un bourrelet de retenue faisant saillie vers l'intérieur, et il est prévu des dispositifs de fixation permettant de fixer un autre profilé ou accessoire en un point quelconque de la longueur d'un profilé, chacun de ces dispositifs comprenant deux pattes d'accrochage, destinées à être placées côte à côte à l'intérieur de l'une des rainures d'un profilé, et dont l'une au moins comporte en bout une nervure apte à être accrochée contre le bourrelet de retenue porté par l'un des bords de la rainure correspondante.

Il est ainsi possible de fixer aisément, contre un profilé déterminé, l'extrémité d'un autre profilé ou un autre élément d'équipement, par exemple une suspente ou un élément de contreventement. Or, cette fixation peut être réalisée en un point quelconque de la longueur du profilé considéré puisque chacun des dispositifs d'attache prévus à cet effet comporte deux pattes qui peuvent être placées côte à côte, après avoir été introduites séparément dans la rainure de retenue correspondante, soit l'une après l'autre, soit en des points différents.

Cependant, d'autres particularités et avantages de l'ensemble d'éléments selon l'invention apparaîtront au cours de la description suivante. Celle-ci est donnée en référence au dessin annexé à simple titre indicatif, et sur lequel:

La figure 1 est une vue partielle en perspective d'une structure tri-dimensionnelle qui est réalisée à partir d'éléments selon l'invention.

La figure 2 est une vue en perspective d'un bloc d'assemblage faisant partie de cet ensemble.

La figure 3 est une vue partielle en perspective de l'une des extrémités d'un profilé faisant également partie de cet ensemble, cette extrémité étant équipée d'un embout amovible de fixation.

La figure 4 est une vue en perspective illustrant le mode de fixation d'un tel profilé sur un bloc d'assemblage.

La figure 5 est une vue en coupe axiale d'un profilé selon la figure 3 après sa fixation sur le bloc d'assemblage de la figure 2.

La figure 6 est une vue en coupe transversale selon la ligne VI–VI de la figure 5, mais à échelle différente.

La figure 7 est une vue partielle en coupe transversale d'un profilé contre lequel est fixé latéralement un autre profilé identique, disposé à angle droit.

La figure 8 est une vue similaire illustrant l'opération initiale d'accrochage du profilé ainsi fixé en place.

La figure 9 est une vue partielle en coupe transversale d'un profilé sur lequel est fixée latéralement une barre de suspente.

La figure 10 est une vue en perspective des deux pattes d'accrochage du dispositif correspondant de fixation.

La figure 11 est une vue partielle en élévation du dispositif de fixation d'une barre de contreventement dans l'angle formé entre deux profilés adjacents, disposés à angle droit.

La figure 12 est une vue en coupe selon la ligne XII–XII de la figure 11.

La figure 13 est une vue en perspective des pattes d'accrochage du dispositif de fixation correspondant.

La figure 14 est une vue en élévation du dispositif de fixation prévu au pied de chacun des poteaux formé par des profilés métalliques du présent ensemble.

Les éléments principaux de cet ensemble sont constitués par des profilés métalliques susceptibles de servir indifféremment de poteaux ou de longerons, ainsi que par des blocs d'assemblage destinés à réunir ceux-ci et des embouts de fixation adaptés à assurer la fixation de ces profilés sur ces blocs.

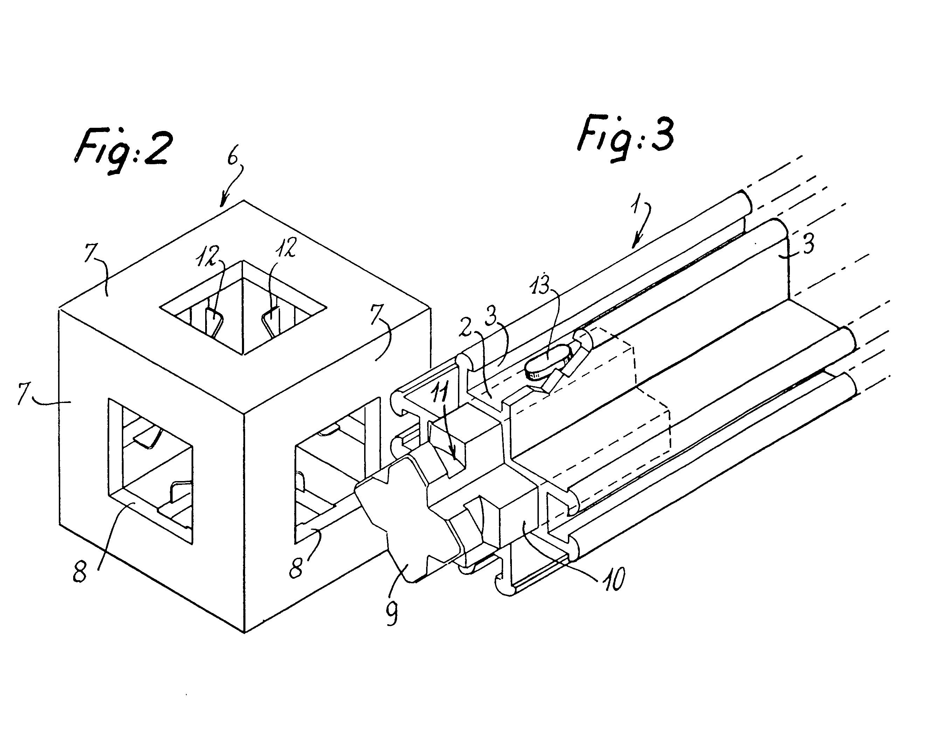

La figure 3 représente l'un des profilés 1 du présent ensemble. Il s'agit d'un profilé creux dont la section affecte la forme d'une croix. Chacune des branches de celle-ci porte, en bout, une face plane 2 qui est encadrée par deux bandes saillantes parallèles 3. Celles-ci sont situées dans le prolongement des parois de la branche correspondante du profilé et elles délimitent entre elles une rainure 4. De plus, le bord de ces deux bandes comporte un bourrelet terminal de retenue 5 qui fait saillie à la fois vers l'extérieur et vers l'intérieur. Comme il sera expliqué par la suite, ces bourrelets, et les rainures 4 des différentes branches du profilé 1, sont destinés à permettre la fixation d'organes aptes à assurer la fixation d'éléments de paroi ou de tous autres éléments voulus d'une structure déterminée.

Dans l'exemple représenté, chaque bloc d'assemblage 6 affecte la forme d'un cube creux dont chaque face 7 présente une ouverture 8 de contour carré. Celle-ci est destinée à recevoir la tête saillante 9 d'accrochage d'un embout de fixation 10 adapté sur l'extrémité d'un profilé 1.

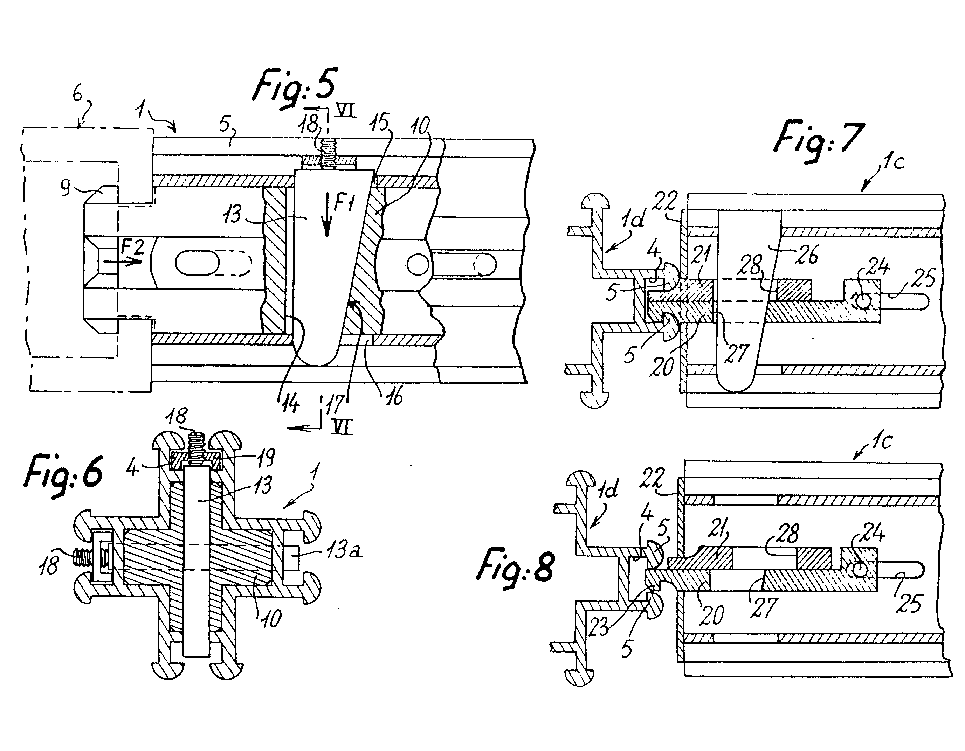

Comme représenté aux figures 3 et 6, cet embout comporte une section en forme de croix de façon à pouvoir être engagé à l'intérieur de l'extrémité d'un profilé 1, tout en laissant à l'extérieur la tête d'accrochage 9 de cet embout. Cette tête présente une section carrée légèrement inférieure à celle des ouvertures 8 des blocs d'assemblage 6 afin de pouvoir être engagée à travers l'une de ces ouvertures. De plus, les différents coins de cette tête coïncident avec les axes des diverses branches du profilé 1, lorsqu'un tel embout de fixation est en place dans un tel profilé (voir figure 3). Par ailleurs, cette tête est séparée du corps même de l'embout correspondant par une gorge circulaire 11 dont la largeur est légèrement supérieur à l'épaisseur des parois du bloc d'assemblage 6.

Pour accrocher un profilé 1 sur un bloc d'assemblage 6, il convient de le présenter dans la position illustrée à la figure 4, c'est-à-dire dans une position pour laquelle les coins de la tête d'accrochage 9 se trouvent en regard des coins de l'ouverture 8 du bloc d'assemblage. Après engagement de cette tête à l'intérieur de ce bloc, il suffit de faire tourner le profilé 1 sur lui-même, d'un angle de 45° pour que chacun des coins de la tête d'accrochage 9 soit situé désormais derrière l'un des côtés de l'ouverture 8, ce qui assure effectivement l'accrochage désiré. Du reste, les parois des blocs d'assemblage peuvent comporter, sur leur face interne, des empreintes 12 destinées à servir de logements aux différents coins des têtes d'accrochage 9, ce qui facilite le positionnement de celles-ci. Après cet accrochage, la fixation du profilé 1 sur le bloc 6 est assurée par des moyens de serrage par coincement.

Comme représenté aux figures 5 et 6, ces moyens de serrage sont constitués par un coin 13 engagé transversalement à l'intérieur d'une ouverture 14 qui traverse de part en part chaque embout 10, ce coin étant également engagé à travers des ouvertures correspondantes 15 et 16 des parois respectives du profilé 1 respectif. La face de ce coin, qui est opposée à la tête d'accrochage 9 de l'embout 10, présente une rampe inclinée 17 disposée au contact d'une surface de même inclinaison prévue sur la paroi correspondante de l'ouverture 14 de l'embout. Ainsi, l'enfoncement du coin 13 selon la flèche F1 provoque à la fois une traction de la tête d'accrochage 9 dans le sens axial selon la flèche F2 et une pression de l'extrémité du profilé 1 contre la face externe du bloc d'assemblage 6, en sens inverse. Il en résulte donc un serrage extrêmement efficace sur le bloc d'assemblage et par suite une fixation parfaitement rigide.

Le déplacement du coin de blocage 13 est assuré par manœuvre d'une vis 18 vissée dans un étrier 19 engagé à l'intérieur de la rainure 4 du profilé 1 qui se trouve située au dessus de la tête de ce coin. Dans ces conditions, l'ensemble se trouve parfaitement bloqué lorsque cette vis est serrée. Cependant, un second coin de blocage 13a peut éventuellement être disposé à angle droit du premier pour renforcer encore le blocage, ainsi qu'il est représenté à la figure 6.

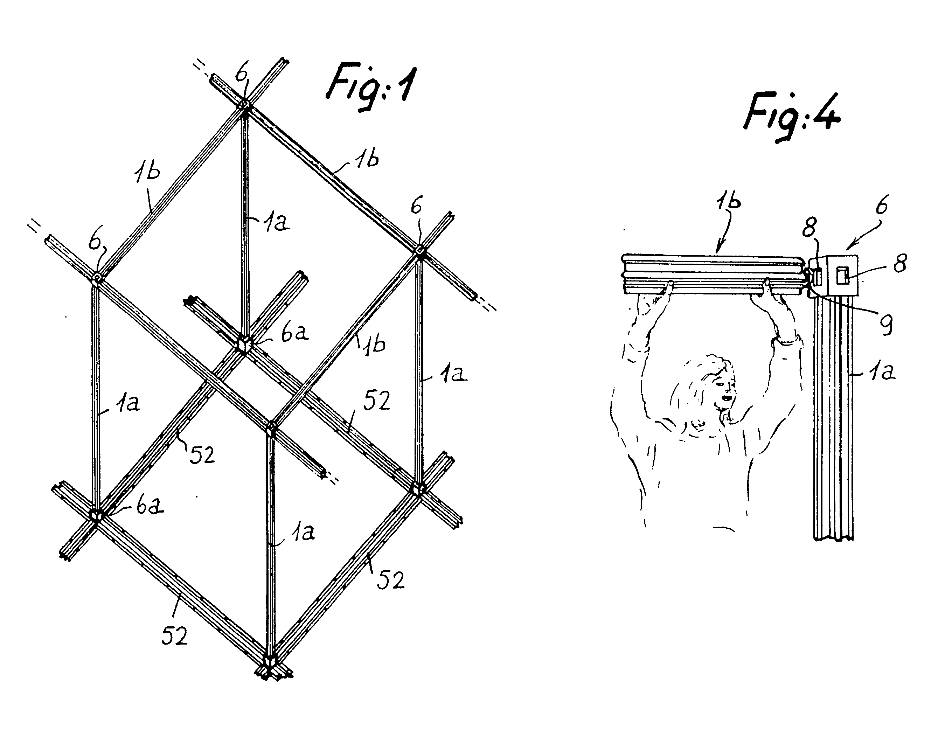

Comme déjà indiqué, les profilés 1 peuvent être utilisés indifféremment pour constituer les poteaux et les longerons d'une structure tri-dimensionnelle, telle que celle illustrée à titre d'exemple sur la figure 1. A leur pied les profilés 1a, qui servent de poteaux, sont fixés sur des blocs d'assemblage 6a, ainsi qu'il sera décrit par la suite. A leur sommet, ces poteaux sont assemblés avec d'autres profilés identiques 1b servant de longerons, cet assemblage étant réalisé au moyen de blocs 6 tels que décrit précédemment. La structure ainsi constituée peut servir de support à des éléments de paroi ou d'autres éléments d'agencement, en utilisant les rainures de retenue 4 des différentes branches des profilés 1 pour y monter des dispositifs de fixation permettant de fixer ces éléments d'agencement ou autres accessoires.

Ces dispositifs de fixation sont conçus de manière à pouvoir être montés en place, en un point quelconque de la longueur des profilés 1, même si ceux-ci sont déjà fixés en bout sur des blocs d'assemblage 6 et qu'en conséquence, il n'est pas possible d'introduire un organe d'accrochage dans l'extrémité d'une rainure 4 pour le faire ensuite coulisser jusque dans la position prévue. A cet effet, ces dispositifs de fixation comprennent chacun deux pattes d'accrochage susceptibles d'être amenées l'une après l'autre dans la position voulue.

Ainsi, les figures 7 et 8 représentent un dispositif de fixation de ce type qui est plus spécialement conçu pour permettre la fixation en bout de l'extrémité d'un profilé 1c contre un point quelconque de la longueur d'un autre profilé identique 1d, ces deux profilés étant disposés à angle droit. Ce dispositif comprend deux pattes d'accrochage 20 et 21 disposées à l'intérieur de l'extrémité du premier profilé 1c et qui peuvent coulisser à travers une ouverture ménagée dans une plaque 22 de fermeture de ce profilé. Les extrémités de ces deux pattes font saillie au-delà de cette plaque et sont destinées à être engagées à l'intérieur de l'une des rainures 4 du profilé 1d.

Cependant, une seule de ces pattes, en l'occurrence la patte 20, comporte, en bout, un rebord 23 destiné à être accroché contre le bourrelet de retenue correspondant 5 prévu dans la rainure 4. En effet, l'extrémité de l'autre patte 21 a simplement pour fonction de servir de cale de remplissage pour maintenir le rebord 23 de la première patte en position d'accrochage. Cette première patte est reliée au profilé 1c par l'intermédiaire d'un axe 24 monté coulissant à l'intérieur d'une lumière 25 prévue dans la paroi correspondante de ce profilé. Quant à la seconde patte 21, elle peut être amenée, par coulissement, dans la position d'escamotage représentée à la figure 8.

Ainsi il est possible d'engager l'extrémité de la première patte 20 dans la rainure 4 en maintenant la seconde patte 21 en position d'escamotage. Puis lorsque la première patte a été complètement enfoncée, on peut amener la seconde patte 21 dans sa position définitive représentée à la figure 7 et coincer l'ensemble au moyen d'un coin de blocage 26 engagé à l'intérieur d'ouvertures 27 et 28 des deux pattes d'accrochage ainsi qu'à travers des ouvertures correspondantes des parois respectives du profilés 1c. Dans ces conditions, ce profilé se trouve parfaitement fixé en place contre le profilé 1d.

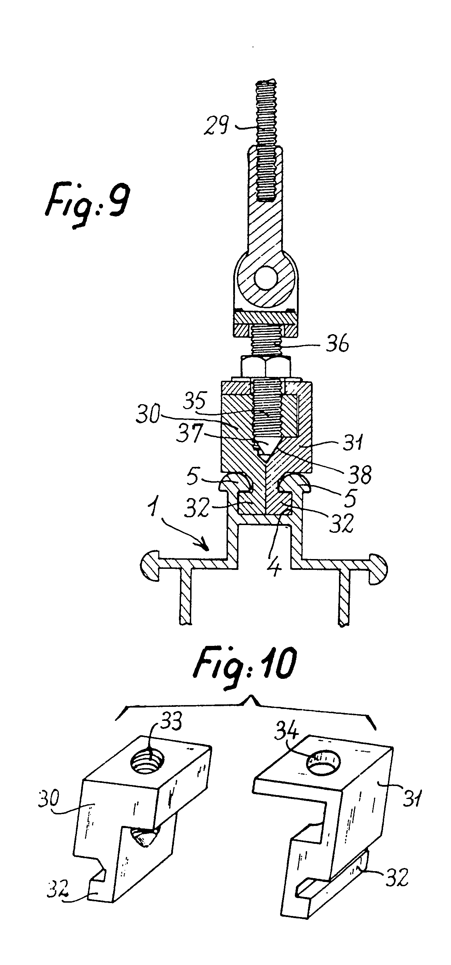

Les figures 9 et 10 représentent un autre dispositif de fixation conçu pour permettre la fixation d'un autre élément d'équipement ou d'un accessoire sur un profilé 1. Dans l'exemple représenté, il s'agit d'un câble ou d'une barre de suspente 29 qui doit être attaché en un point intermédiaire de la longueur d'un profilé 1.

Le dispositif correspondant de fixation comprend deux pattes d'accrochage 30 et 31 qui comportent toutes deux, à leurs extrémités, un rebord 32 destiné à être accroché contre un bourrelet 5 d'une rainure latérale de retenue 4 du profilé 1. Les extrémités opposées des deux pattes 30 et 31 sont destinées à être emboîtées l'une dans l'autre après que ces pattes aient été engagées dans la rainure 4 en des points différents de la longueur du profilé 1, de façon à permettre le passage des rebords d'accrochage 32. L'extrémité correspondante de la patte 30 comporte un trou taraudé 33 alors que l'extrémité respective de la patte 31 présente un simple trou lisse 34. Lorsqu'il sont en concordance, ces deux trous sont destinés à recevoir une vis d'assemblage 35 assurant la fixation en place d'un étrier 36 portant l'accessoire à fixer, par exemple un cable 29 de suspente.

Cependant, l'extrémité de cette vis 35 se termine par une pointe conique 37 qui vient s'appliquer contre des sièges 38 de même forme, prévus respectivement sur la face interne de la patte 31 et sur la face correspondante de la patte 30. Ainsi, le vissage de la vis 35 tant à écarter ces deux pattes et à assurer de ce fait un parfait blocage des rebords d'accrochage 32 de celles-ci contre les bourrelets de retenue 5.

On peut donc assurer de la sorte la fixation de tout accessoire voulu le long d'un profilé 1, et ce, en un point quelconque de la longueur de celui-ci. En effet, les pattes d'accrochage 30 et 31 peuvent être engagées dans une rainure 4 en deux endroits différents de celle-ci pour être ensuite amenées, par coulissement, en regard l'une de l'autre dans leur position d'accrochage.

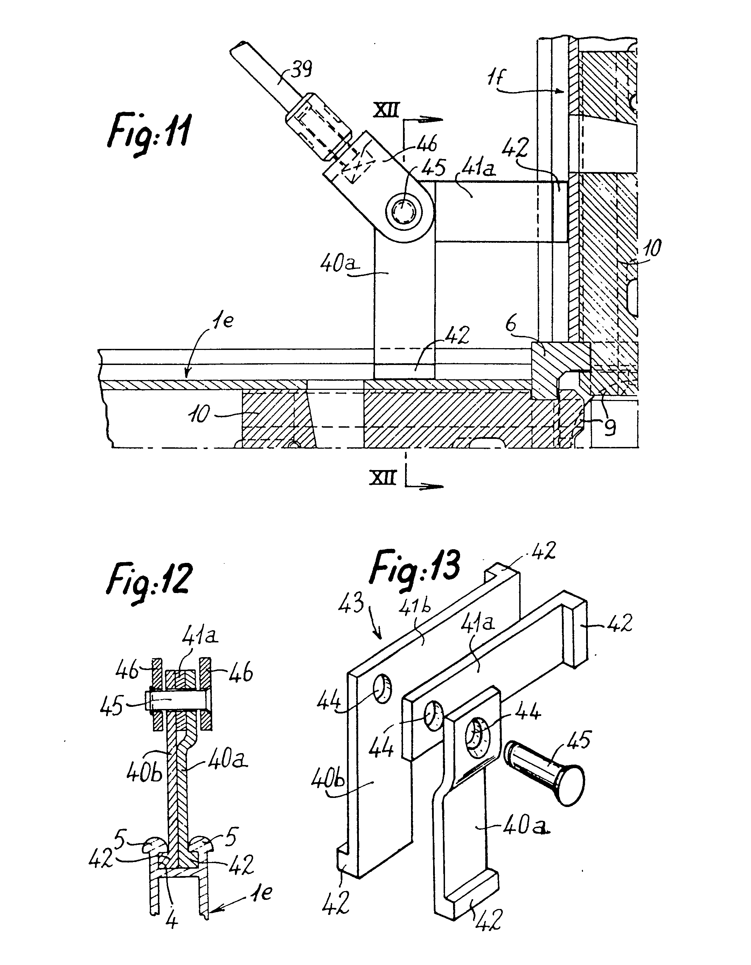

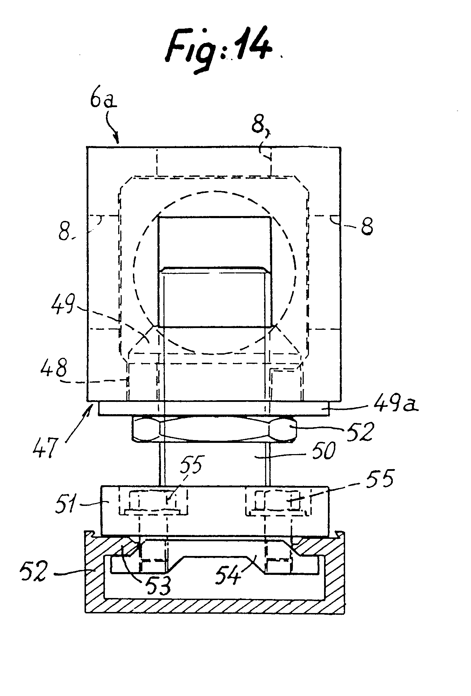

Les figures 11 à 13 représentent un autre dispositif de fixation destiné à permettre la fixation de l'une des extrémités d'une barre 39 de contreventement dans l'angle formé entre deux profilés 1e et 1f du type des profilés 1. Ce dispositif comprend deux paires de pattes d'accrochage 40a, 40b d'une part et 41a, 41b d'autre part, dont les extrémités sont pourvues de bourrelets 42 susceptibles d'être accrochés contre les bourrelets 5 des flancs de la rainure correspondante de retenue 4 des profilés 1e et 1f. De préférence, l'une des pattes 40b de l'une des deux paires fait corps avec l'une des pattes 41b de l'autre paire, ces deux pattes étant constituées par les deux branches d'une pièce 43 en forme de L. Quant aux deux autres pattes 40a et 41a, elles sont indépendantes l'une de l'autre. Toutes ces pattes comportent un trou 44 pour le passage d'un axe 45 de liaison qui est également engagé à travers des trous similaires prévus dans les deux joues d'un étrier 46 sur lequel est attachée l'extrémité de la barre de contreventement 39.

Compte tenu de l'articulation des différentes pattes d'accrochage autour de l'axe 45, il est possible d'introduire les extrémités des pattes d'une même paire en des points différents de la longueur de la rainure 4 correspondante. Ceci permet donc le passage des bourrelets de retenue 42 après quoi, les deux pattes d'accrochage de chaque paire sont amenées l'une en regard de l'autre dans leur position définitive représentée aux figures 11 et 12. Ensuite, elles se maintiennent dans cette position sous l'effet de la traction exercée par la barre de contreventement 39.

Comme on peut le constater, ces différents dispositifs de fixation présentent donc, comme caractéristique commune, le fait de comprendre chacun deux pattes d'accrochage qui sont susceptibles d'être amenées l'une à la suite de l'autre dans leur position définitive dans laquelle ces deux pattes, disposées l'une en regard de l'autre, remplissent la rainure de retenue correspondante 4 d'un profilé 1 en ayant leur rebord d'accrochage en contact avec les bourrelets 5 de retenue de cette rainure.

Ainsi qu'il a déjà été mentionné, les profilés 1a servant de poteaux sont fixés à leur pied sur des blocs d'assemblage 6a dont l'un d'entre eux est représenté à la figure 14. Celui-ci ne diffère des blocs d'assemblage 6 déjà décrits que par le fait que sa face inférieure 47 présente une ouverture circulaire taraudée 48 à la place des ouvertures 8 prévues dans les autres faces. Dans cette ouverture taraudée 48 est vissée une bague 49 pourvue d'une collerette inférieure 49a. A l'intérieur de cette bague est vissé un plot 50 porté par une embase 51. Ce mode de montage permet de régler la position en hauteur du bloc 6a, un contre-écrou 52 assurant le blocage dans la position voulue.

Lorsque les présents éléments de construction sont utilisés dans un espace d'exposition ou autre, dont le sol est aménagé à l'avance, l'embase 51 de chaque bloc 6a est montée sur un rail 52 fixé au sol et qui présente un profil général en U avec des rebords 53 faisant saillie vers l'intérieur. Dans un tel cas, l'embase 51 porte un ou plusieurs patins 54 engagés à l'intérieur du rail correspondant 52 et qui sont reliés à cette embase par des boulons 55. Ces derniers permettent alors d'immobiliser l'embase 51 dans la position exacte voulue par serrage des rebords 53 entre les patins 54 et l'embase 51.

Cependant, dans le cas d'une installation devant être réalisée sur un sol non équipé à l'avance de rails 52, il suffit de fixer directement au sol les embases 51 au moyen de boulons ou par tout autre moyen approprié.

Du reste, il va de soi que les éléments de construction selon l'invention ne sont pas limités à l'exemple de réalisation décrit ci-dessus. Ainsi les ouvertures 8 des blocs d'assemblage 6 peuvent affecter un contour polygonal autre qu'un contour carré. Elles peuvent également présenter un contour ovale. Dans chacun de ces cas, la tête d'accrochage 9 des embouts de fixation 10 comporte un même contour pour permettre son introduction, après quoi, il suffit de faire tourner le profilé correspondant sur lui-même pour obtenir l'accrochage de cette tête à l'intérieur du bloc d'assemblage correspondant. Eventuellement, les ouvertures 8 de ces blocs pourraient même présenter un contour circulaire sous réserve de prévoir un certain nombre d'encoches radiales en correspondance desquelles la tête d'accrochage 9 des embouts de fixation comporterait des ergots de retenue, ce qui permettrait de réaliser un système d'accrochage à baïonnette.

Par ailleurs, les blocs d'assemblage pourraient présenter une forme autre que cubique, pour permettre la disposition des profilés 1 dans des positions autres qu'une orientation à 90° les uns par rapport aux autres, chacun de ces blocs comportant alors une série de faces orientées dans les différentes directions prévues pour les profilés correspondants.

Quant à ces derniers, ils ne sont pas limités au cas où leur section affecte une forme cruciforme. En effet, leur section pourrait présenter toute autre forme, sous réserve de comporter une série de rainures de retenue, disposées dans des orientations différentes, et analogues aux rainures de retenue 4 prévues sur les profilés 1 précédemment décrits.

L'ensemble d'éléments selon l'invention peut être utilisé pour réaliser des structures tri-dimensionnelles destinées à servir de support pour divers éléments d'agencement, tels que des éléments de paroi ou de plancher, de gradins, de stands d'exposition etc... Le présent ensemble peut faire l'objet d'application dans des domaines très divers, notamment pour l'aménagement temporaire d'espaces d'exposition, ou bien encore pour l'agencement d'une pièce d'habitation, ou d'une salle d'un magasin de vente ou bien encore d'un bureau, etc...

## Revendications

1. Ensemble d'éléments de construction pour la réalisation de structures tri-dimensionnelles pour l'aménagement d'espaces d'exposition, d'habitation, de bureaux ou affectés à d'autres usages, comprenant des profilés métalliques creux pouvant servir indifféremment de poteaux ou de longerons, ainsi que des nœuds d'assemblage constitués chacun par un bloc creux comportant, dans différentes orientations une série d'ouvertures dans chacune desquelles peut être accroché la tête saillante d'un embout de fixation rapporté dans l'extrémité d'un profilé, caractérisé en ce que l'embout de fixation (10) ainsi prévu dans les extrémités des profilés (1) est monté coulissant dans le sens axial à l'intérieur de ces profilés et il est prévu un coin mobile de blocage (13) disposé transversalement à l'intérieur d'un tel embout de fixation (10), ainsi qu'à travers des ouvertures correspondantes (15, 16) du profilé respectif (1), ce qui permet de fixer ce profilé sur un nœud d'assemblage (6) par serrage des bords d'une ouverture (8) de ce nœud entre les rebords de la tête saillante (9) de l'embout de fixation (10) et l'extrémité du profilé.

2. Ensemble d'éléments selon la revendication 1, caractérisé en ce que les profilés (1) présentant une série de faces planes (2) orientées dans différentes directions, chacune de ces faces porte, sur ses côtés, deux bandes parallèles (3) délimitant une rainure (4) et dont les bords sont pourvus d'un bourrelet de retenue (5) faisant saillie vers l'intérieur, et en ce qu'il est prévu des dispositifs de fixation permettant de fixer un autre profilé (1) ou accessoire en un point quelconque de la longueur d'un profilé (1), chacun de ces dispositifs comprenant deux pattes d'accrochage, destinées à être placées côte à côte à l'intérieur de l'une des rainures (4) d'un profilé (1), et dont l'une au moins comporte en bout une nervure (23, 32, 42) apte à être accrochée contre le bourrelet de retenue (5) porté par l'un des bords de la rainure correspondante (4).

3. Ensemble d'éléments selon la revendication 2, caractérisé en ce que les dispositifs de fixation sur les profilés (1) étant destinés à permettre la fixation d'un autre profilé identique (1c) contre l'une des faces d'un tel profilé (1d), les deux pattes d'accrochage (20, 21) de chacun de ces dispositifs sont montées coulissantes l'une contre l'autre à l'intérieur de l'extrémité du profilé (1c) à fixer en place et un coin de blocage (26) est engagé transversalement à travers ces deux pattes et des ouvertures correspondantes de ce profilé pour assurer le serrage de l'ensemble.

4. Ensemble d'éléments selon la revendication 2, caractérisé en ce que les dispositifs de fixation sur les profilés (1) étant destinés à permettre la fixation d'un accessoire contre l'une des faces d'un tel profilé, chacun de ces dispositifs comporte un organe de blocage, par exemple une vis (35), apte à assurer un écartement des deux pattes d'accrochage (30, 31), de façon à assurer leur fixation en place.

5. Ensemble d'éléments selon la revendication 2, caractérisé en ce que les dispositifs de fixation sur les profilés (1) étant destinés à permettre la fixation d'un élément de contreventement (39) dans l'un des angles formés entre deux profilés voisins (1e, 1f), chacun de ces dispositifs comprend deux paires de pattes d'accrochage (40a, 40b et 41a, 41b), destinées à être accrochées dans des rainures (4) de l'un et l'autre profilés, et qui sont montées articulées autour d'un axe de liaison (45) porté par une pièce de fixation (46) de l'élément correspondant de contreventement.

6. Ensemble d'éléments selon la revendication 5, caractérisé en ce que deux pattes d'accrochage (40b, 41b) appartenant à l'une et l'autre paires sont constituées par les deux branches d'une pièce coudée (43) d'un seul tenant, alors que les deux autres pattes d'accrochage sont indépendantes l'une de l'autre.

7. Ensemble d'éléments selon l'une des revendications précédentes, caractérisé en ce que, pour la fixation du pied des profilés (1) servant de poteaux (1a), il comprend une embase (51) sur laquelle est fixé un nœud d'assemblage (6a) du même type que les autres sauf en ce qui concerne sa face inférieure qui est fixée sur un plot vertical (50) portée par cette embase.

8. Ensemble d'éléments selon la revendication 7, caractérisé en ce que certaines au moins des embases inférieures de fixation (6a) portent un patin (54) monté coulissant dans un rail (52) fixé au sol, des boulons de serrage (55) étant prévus entre chaque embase et le patin correspondant pour assurer le blocage en place de l'ensemble.

9. Ensemble d'éléments selon l'une des revendications précédentes, caractérisé en ce que la section de chaque profilé (1) affecte la forme d'une croix creuse dont chaque branche porte en bout une face plane (2) encadrée par deux bandes parallèles (3) délimitant une rainure de retenue (4), la section des embouts de fixation (10) affectant la forme d'une croix pleine apte à être engagée à l'intérieur de l'extrémité d'un tel profilé.

## Patentansprüche

1. Einheit von Konstruktionselementen für die Errichtung dreidimensionaler Strukturen zum Bau von Räumlichkeiten für Ausstellungen, zum Wohnen, für Büros oder geeignet für andere Verwendungszwecke, mit metallischen Profilstangen mit kreuzförmigem Querschnitt, die gleichermaßen vertikal oder horizontal verbaubar sind, mit Verbindungsknoten, die jeweils aus einem kreuzförmigen Block bestehen, der in den verschiedenen Richtungen Öffnungen aufweist, in die jeweils der auskragende Kopf eines Befestigungsstücks einhängbar ist, welches am Ende der Profilstange angeordnet ist, dadurch gekennzeichnet, daß das Befestigungsstück (10), welches an den Enden der Profilstangen (1) vorgesehen ist, im Innern der Profilstangen axial verschieblich angeordnet ist, daß ein Befestigungskeil (13) vorgesehen ist, der einerseits das Innere des Befestigungsstücks (10) und andererseits zugeordnete Öffnungen (15, 16) in der Profilstange (1) durchsetzt und der es ermöglicht, die Profilstange an einem der Verbindungsknoten (6) zu fixieren und zwar durch Zusammenziehen des Rands einer der Öffnungen (8) des Verbindungsknotens zwischen Vorsprüngen an dem auskragenden Kopf (9) des Befestigungsstückes (10) und dem Ende der Profilstange.

2. Einheit nach Anspruch 1, dadurch gekennzeichnet, daß die Profilstangen (1) mehrere in verschiedene Richtungen weisende ebene Flächen (2) aufweisen, wobei jede Fläche an ihren Enden zwei parallele Stege (3) besitzt, die eine vertieft angeordnete Rinne (4) bilden und an deren freien Enden nach innen überstehende Verankerungsflansche (5) vorgesehen sind, und daß Verbindungselemente vorgesehen sind, mit denen eine weitere Profilstange (1) oder ein sonstiges Zubehörteil an einer beliebigen Stelle der Länge der Profilstange (1) fixierbar ist, wobei jedes Verbindungselement zwei Kupplungsstücke (20, 21) aufweist, die Seite an Seite angeordnet in das Innere einer der vertieft angeordneten Rillen (4) der Profilstange (1) eingreifen und von denen mindestens eines eine den Verankerungsflansch (5) an dem Steg (3) der entsprechenden Rinne (4) hintergreifende Rippe (23, 32, 42) trägt.

3. Einheit nach Anspruch 2, dadurch gekennzeichnet, daß die Verbindungselemente an den Profilstangen (1) zur Befestigung einer weiteren identischen Profilstange (1c) an einer der Flächen (2) der ersten Profilstange (1d) ausgebildet sind, daß die beiden Kupplungsstücke (20, 21) jedes Verbindungselements aneinander gleitend im Innern des Endes der Profilstange (1c) gelagert sind, und daß ein Blockierkeil (26) vorgesehen ist, der die beiden Kupplungsstücke (20, 21) und entsprechende Öffnung quer durchsetzt, um die zusammengezogene Einheit abzusichern.

4. Einheit nach Anspruch 2, dadurch gekennzeichnet, daß die Verbindungselemente an den Profilstangen (1) zur Befestigung eines Zubehörteils an einer der Flächen dieser Profilstange ausgebildet sind, wobei jedes dieser Verbindungselemente ein Blockierorgan trägt, beispielsweise eine Schraube (35), um den Abstand zwischen den beiden Kupplungsstücken (30, 31) in der Weise zu sichern, daß diese an der betreffenden Stelle festgelegt sind.

5. Einheit nach Anspruch 2, dadurch gekennzeichnet, daß die Verbindungselemente an den Profilstangen (1) zur Befestigung eines Verstrebungselements (39) an einer der Ecken, die zwischen zwei benachbarten Profilstangen (1e, 1f) gebildet werden, ausgebildet sind, daß jedes dieser Verbindungselemente zwei Paare von Kupplungsstücken (40a, 40b und 41a, 41b) zum Eingreifen in die vertieften Rinnen (4) der einen und der anderen Profilstange aufweist, wobei die Kupplungsstücke gelenkig um eine Verbindungsachse (45) gelagert sind, die von einem Befestigungsstück (46) an dem Verstrebungselement gebildet ist.

6. Einheit nach Anspruch 5, dadurch gekennzeichnet, daß die beiden Kupplungsteile (40b, 41b) an dem einen und dem anderen Kupplungspaar von den beiden Fortsätzen eines einzigen Winkelstücks (43) gebildet sind, während die beiden anderen Kupplungsteile (40a, 41a) unabhängig voneinander vorgesehen sind.

7. Einheit nach einem der Ansprüche 1 bis 6, dadurch gekennzeichnet, daß zur Befestigung des unteren Endes der vertikal eingesetzten Profilstange (1a) ein Ansatzstück (51) vorgesehen ist, an welchem ein ähnlicher Verbindungsknoten (6a) wie auch die anderen befestigt ist, wobei lediglich die untere Fläche, die an einem vertikal angeordneten und von dem Ansatz getragenen Bolzen (50) befestigt ist, abweichend ausgebildet ist.

8. Einheit nach Anspruch 7, dadurch gekennzeichnet, daß einige der Ansätze (51) an den Verbindungsknoten (6a) eine Gleitplatte (54) aufweisen, die verschiebbar in einer am Boden befestigten Schiene (52) angeordnet ist, und daß Befestigungsschrauben (55) zwischen jedem Ansatz und der zugeordneten Gleitplatte zum örtlichen Festziehen vorgesehen sind.

9. Einheit nach einem der Ansprüche 1 bis 8, dadurch gekennzeichnet, daß die Profilstangen (1) einen Querschnitt nach Art eines Hohlkreuzes aufweisen, wobei jeder Fortsatz am Ende eine ebene Fläche (2) trägt, die von zwei parallelen Stegen (3) eingeschlossen ist, die eine vertieft angeordnete Rinne (4) begrenzen, und daß die Befestigungsstücke (10) einen Querschnitt nach Art eines Vollkreuzes aufweisen, welches passend zu dem Innenraum des Querschnitts der Profilstangen ausgebildet ist.

## Claims

1. Set of construction elements for the erection of three-dimensional structures with a view to installing exhibition areas, residential areas, office areas or any areas having other functions, comprising hollow metallic structural members which can serve indifferently either as posts or as longitudinal members, as well as nodal assembly elements each constituted by a hollow block provided in different orientations with a series of openings in each of which can be engaged the projecting head of an attachment end-fitting mounted within the end portion of a structural member, characterized in that the attachment end-fitting (10) thus provided in the end portions of the structural members (1) is mounted for displacement in axial sliding motion within the interior of said structural members and provision is made for a movable locking wedge (13) placed transversely within the attachment end-fitting (10) aforesaid and inserted through corresponding openings (15, 16) of the respective structural member (1), thus making it possible to fasten said structural member to an assembly block (6) by clamping the edges of one opening (8) of said assembly block between the flanges of the projecting head (9) of the attachment end-fitting (10) and the end of the structural member.

2. Set of elements in accordance with claim 1, characterized in that, the structural members (1) being provided with a series of flat faces (2) oriented in different directions, the sides of each face carry two parallel strips (3) which define a groove (4) and the edges of which are provided with an inwardly projecting retaining bead (5) and that attachment devices are provided for fixing another structural member (1) or accessory at any point along the length of a structural member (1), each of these devices being provided with two fastening brackets which are intended to be placed side by side within one of the grooves (4) of a structural member (1) and at least one bracket being provided with a terminal rib (23, 32, 42) which is capable of being fastened against the retaining bead (5) carried by one of the edges of the corresponding groove (4).

3. Set of elements in accordance with claim 2, characterized in that, the devices for fastening to the structural members (1) being intended to permit attachment of another identical structural member (1c) against one face of a structural member (1d) of this type, the two fastening brackets (20, 21) of each of these devices are mounted for displacement in sliding contact with each other within the end portion of the structural member (1c) to be fixed in position and a locking wedge (26) is engaged transversely through these two fastening brackets and through corresponding openings of said structural member in order to produce a clamping action on the assembly.

4. Set of elements in accordance with claim 2, characterized in that, the devices for fastening to the structural members (1) being intended to permit attachment of an accessory against one face of a structural member of this type, each of these devices has a locking element such as a screw (35), for example, for spacing the two fastening brackets (30, 31) in order to fix them in position.

5. Set of elements in accordance with claim 2, characterized in that, the devices for fastening to the structural members (1) being intended to permit attachment of a bracing member (39) in one of the corners formed between two adjacent structural members (1e, 1f), each of these devices comprises two pairs of fastening brackets (40a, 40b and 41a, 41b) which are intended to be retained within grooves (4) of both structural members and which are pivotally mounted on a connecting pin (45) carried by an attachment component (46) of the corresponding bracing element.

6. Set of elements in accordance with claim 5, characterized in that two fastening brackets (40b, 41b) forming part of each pair of brackets are constituted by the two arms of a single-piece L-shaped member (43) whereas the other two fastening brackets are independent of each other.

7. Set of elements in accordance with one of the preceding claims, characterized in that, in order to fix the lower ends of the structural members (1) which serve as posts (1a), provision is made for a base (51) on which is fixed an assembly block (6a) of the same type as the other blocks except in regard to the bottom face thereof which is fixed on a vertical stud (50) carried by said base.

8. Set of elements in accordance with claim 7, characterized in that at least a certain number of the bottom mounting bases (6a) are provided with a shoe (54) slidably mounted in a rail (52) anchored to the floor, clamping bolts (55) being provided between each base and the corresponding shoe in order to lock the complete assembly in position.

9. Set of elements in accordance with one of the preceding claims, characterized in that each structural member (1) has a cross-section in the shape of a hollow cross, each arm of which carries at the end a flat face (2) on each side of which are located two parallel strips (3) which define a retaining groove (4), the cross-section of the attachment end-fittings (10) being designed in the shape of a full cross which is capable of engagement within the end portion of a structural member of this type.

Fig:1

Fig:4

EP 0187100 B1

EP 0187100 B1

Fig:3

Fig:2

11

Fig.7

Fig.8

Fig.5

Fig.6

*Fig:9*

*Fig:10*

15

*Fig.11*

39

XII

46
45
41a
42
1f

40a

42

10

1e

42
6

10
9

XII

*Fig.12*

41a
46
46
45

40b
40a

5
5
42
42
4
1e

*Fig.13*

42
43
41b
41a
42

44

44

44
45

40b
40a

42

42

# Fig:14.